# EUROPEAN PATENT APPLICATION

(11) **EP 4 559 838 A1**
(43) Date of publication of application: **28.05.2025**
(21) Application number: 23865085.7
(22) Date of filing: 24.07.2023
(51) Int. Cl.: B65G 1/00, G05D 1/20, B60L 58/12

(54) **TRAVELING VEHICLE SYSTEM**

(30) Priority: 13.09.2022 JP 2022145082
(71) Applicant: Murata Machinery, Ltd., Kyoto-shi, Kyoto 601-8326 (JP)
(72) Inventor: GOTO Ayumu, Inuyama-shi, Aichi 484-8502 (JP)
(74) Representative: Weickmann & Weickmann PartmbB
(86) International application number: PCT/JP2023/027055
(87) International publication number: WO 2024/057725

(57) **Abstract**

A traveling vehicle system includes a plurality of traveling vehicles having an electricity storage device and a travel driving unit driven by electric power stored in the electricity storage device and configured to travel on a route set in advance, a plurality of charging points provided along the route and configured to charge the electricity storage device of the traveling vehicles, and a controller configured to instruct a traveling vehicle having an electricity storage amount of the electricity storage device fallen below a first threshold to move to the charging point. The controller has a vacancy detector configured to detect a vacancy status of the charging points for the traveling vehicles, and a movement instruction unit configured to, instruct the traveling vehicle having the electricity storage amount equal to or above the first threshold to move to the vacant charging point, when a vacant charging point not charging a traveling vehicle is detected by the vacancy detector.

## Description

### Technical Field

An aspect of the present invention relates to a traveling vehicle system.

### Background Art

A traveling vehicle system (a transport vehicle system) including unmanned traveling vehicles traveling by the electric power of an electricity storage device is known (for example, Patent Literature 1). In the traveling vehicle system, the traveling vehicles travel on a certain traveling route based on instructions from a superordinate controller or the like to transport articles such as baggage. The traveling vehicles are controlled by the superordinate controller so as to move to charging points when they fall below a certain electricity storage amount so that the electricity storage amount does not become zero.

### Citation List

### Patent Literature

[Patent Literature 1] Japanese Unexamined Patent Publication No. 2019-101963

### Summary of Invention

### Technical Problem

However, in the traveling vehicles constituting the traveling vehicle system, when many traveling vehicles fall below the certain electricity storage amount at the same time and head for the charging points at the same time, the number of operable traveling vehicles temporarily decreases, and the transport capacity of the traveling vehicle system decreases.

Thus, an object of an aspect of the present invention is to provide a traveling vehicle system capable of reducing the possibility of multiple traveling vehicles having a decreased electricity storage amount occurring simultaneously.

### Solution to Problem

A traveling vehicle according to an aspect of the present invention includes a plurality of traveling vehicles having an electricity storage device and a travel driving unit driven by electric power stored in the electricity storage device and configured to travel on a route set in advance, a plurality of charging points provided along the route and configured to charge the electricity storage device of the traveling vehicles, and a controller configured to instruct a traveling vehicle having an electricity storage amount of the electricity storage device fallen below a first threshold to move to a charging point, the controller having a vacancy detector configured to detect a vacancy status of the charging points for the traveling vehicles, and a movement instruction unit configured to instruct a traveling vehicle having the electricity storage amount equal or above the first threshold or more to move to the vacant charging point, when a vacant charging point not charging a traveling vehicle is detected by the vacancy detector.

The traveling vehicle system of this configuration can even move the traveling vehicle having the electricity storage amount not falling below the first threshold to the charging point as soon as the charging point becomes vacant and charge the traveling vehicle. This relatively increases the number of the traveling vehicles in a state of a large electricity storage amount and can thus reduce the possibility of multiple travelling vehicles falling below the first threshold occurring simultaneously.

In the traveling vehicle system according to an aspect of the present invention, the vacancy detector may detect the charging point that is not charging a traveling vehicle and is not designated as a movement destination of the movement instruction as the vacant charging point. This configuration sets only the charging point not being currently designated as the movement destination of the movement instruction among the currently vacant charging points the vacant charging point and can thereby inhibit the number of the traveling vehicles to be charged from excessively increasing. That is, the transport capacity of the traveling vehicle system can be prevented to decrease.

In the traveling vehicle system according to an aspect of the present invention, the vacancy detector may determine whether a specific charging point set in part of the charging points is the vacant charging point. This configuration does not detect the vacant charging point from among all the charging points but detects the vacant charging point from among partial charging points and can thus prevent that the number of the traveling vehicles to be charged excessively increases. That is, the transport capacity of the traveling vehicle system can be prevented to decrease.

In the traveling vehicle system according to an aspect of the present invention, the controller may manage the route of the traveling vehicles in a divided manner into a plurality of areas, the charging points may be disposed in the respective areas, and the specific charging point may be set in at least one of the charging points disposed in each of the areas. This configuration sets the specific charging points such that they are not concentrated in a certain area and can thus prevent that the number of the traveling vehicles under charging to locally increases. This enables quick charging of a traveling vehicle having the electricity storage amount fallen below the first threshold.

In the traveling vehicle system according to an aspect of the present invention, the movement instruction unit may provide an upper limit of the number of the traveling vehicles instructed to move to the vacant charging point. This configuration can prevent that the number of the travelling vehicles to be charged excessively increases.

In the traveling vehicle system according to an aspect of the present invention, the movement instruction unit may instruct the traveling vehicle being at or above the first threshold and being at or below a second threshold lower than a full electricity storage amount to move to the vacant charging point. This configuration prevents overcharging to the electricity storage device and can thus protect the electricity storage device.

In the traveling vehicle system according to an aspect of the present invention, the movement instruction unit may instruct the traveling vehicle having the smallest electricity storage amount among the traveling vehicles having the electricity storage amount at or above the first threshold and at or below the second threshold to move to the vacant charging point. This configuration preferentially charges the traveling vehicle requiring charging in the near future and can thereby prevent that a traveling vehicle falls below the first threshold.

In the traveling vehicle system according to an aspect of the present invention, the movement instruction unit may instruct the traveling vehicle positioned within a certain zone from the vacant charging point to move to the vacant charging point. This configuration preferentially charges the traveling vehicle close to the charging point and can thereby reduce losses due to movement. That is, the traveling vehicle is quickly charged, and can thus prevent that the traveling vehicle falls below the first threshold.

In the traveling vehicle system according to an aspect of the present invention, the movement instruction unit may instruct the traveling vehicle positioned closest to the vacant charging point to move to the vacant charging point. This configuration preferentially charges the traveling vehicle closest to the charging point, thereby quickly charges the traveling vehicle while minimizing losses due to movement, and can thus prevent more effectively that the traveling vehicle falls below the first threshold.

### Advantageous Effects of Invention

An aspect of the present invention can reduce the possibility of multiple traveling vehicles having a decreased electricity storage amount occurring simultaneously.

### Brief Description of Drawings

[FIG. 1] FIG. 1 is an overall schematic diagram of a traveling vehicle system according to an embodiment.
[FIG. 2] FIG. 2 is a schematic configuration diagram of a traveling vehicle.
[FIG. 3] FIG. 3 is a functional block diagram illustrating a functional configuration of the traveling vehicle system according to the embodiment.
[FIG. 4] FIG. 4 is a flowchart illustrating movement control of the traveling vehicle by a movement instruction unit.

### Description of Embodiments

The following describes a traveling vehicle system 1 according to an embodiment with reference to the accompanying drawings. In the description of the drawings, the same elements are denoted by the same symbols, and redundant descriptions are omitted.

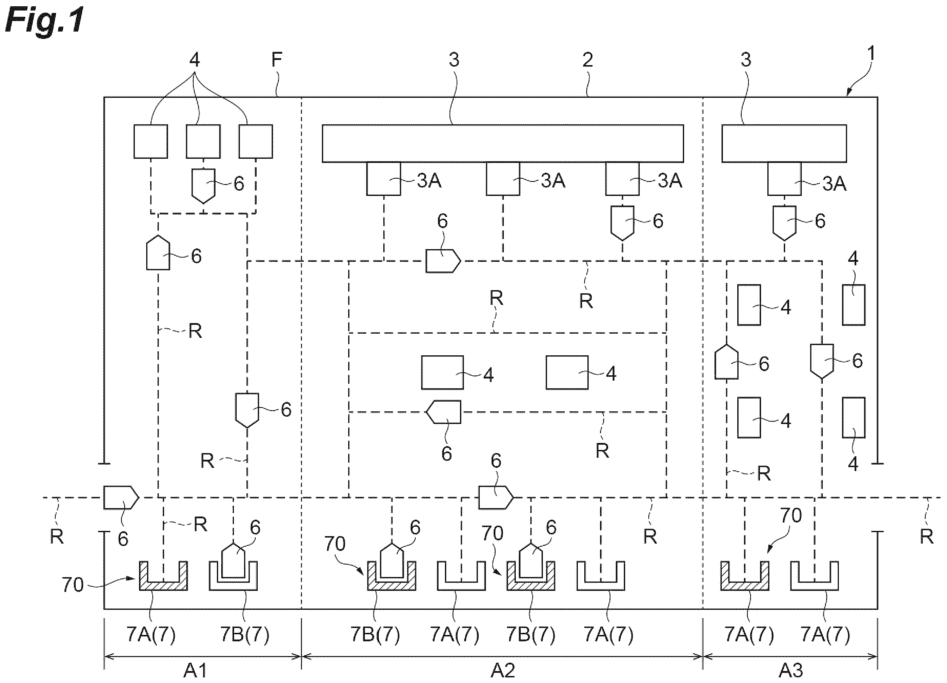

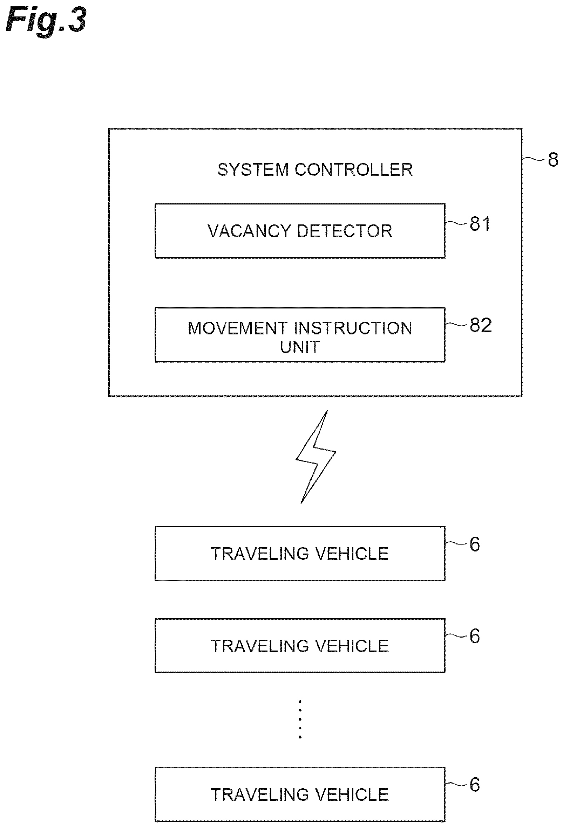

As illustrated in FIG. 1, the traveling vehicle system 1 is, for example, a transport system performing transport of articles between automated warehouses 3 and various kinds of processing apparatuses 4 disposed in a building 2 of a factory manufacturing secondary batteries, transport of articles between the outside and inside of the building 2, and the like. The traveling vehicle system 1 includes a plurality of traveling vehicles 6, charging points 7, and a system controller 8 (refer to FIG. 3).

The automated warehouse 3 is a warehouse storing a plurality of articles. The automated warehouse 3 has storage shelves (not illustrated) capable of placing a plurality of articles, a stacker crane (not illustrated) transporting articles between the storage shelves and incoming and outgoing ports 3A, and the incoming and outgoing ports 3A to which articles can be transferred by the traveling vehicles 6. The various kinds of processing apparatuses 4 are disposed such that articles can be transferred thereto by the traveling vehicles 6. Examples of the various kinds of processing apparatuses 4 include electrode manufacturing apparatuses and cell assembly apparatuses.

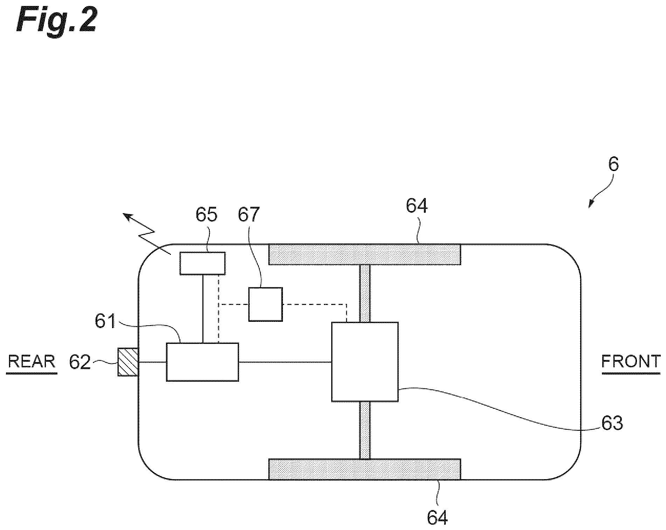

As illustrated in FIG. 1 and FIG. 2, the traveling vehicle 6, supplied with electric power from an electricity storage device 61, autonomously travels along a route R set in advance. The traveling vehicle 6 is, for example, an automated guided vehicle (AGV). The route R set in advance may be, for example, a magnetic tape or a magnetic marker provided so as to form a traveling route for the traveling vehicle 6 on the floor of the building 2. In this case, the traveling vehicle 6 travels while detecting a magnetic signal or the like output from the magnetic tape, the magnetic marker, or the like. Note that the traveling vehicle 6 may travel while detecting its own position by generating light from a laser or the like and detecting reflected light reflected by a mirror mounted on a wall or the like of the building 2 or travel while detecting its own position by utilizing information on GPS or the like.

The traveling vehicle system 1 of the present embodiment arranges a plurality of traveling vehicles 6. Each of the traveling vehicles 6 mainly has the electricity storage device 61, an electricity receiving unit 62, a travel driving unit 63, a pair of wheels 64 and 64, a communication interface 65, and a traveling vehicle controller 67.

The electricity storage device 61 supplies electric power to the travel driving unit 63, the traveling vehicle controller 67, and the like. The electricity storage device 61 is a secondary battery capable of being charged with external electric power. Examples of the electricity storage device 61 include nickel-cadmium batteries, nickel-hydrogen batteries, and lithium-ion batteries.

The electricity receiving unit 62 is provided at the front or rear of the traveling direction of the traveling vehicle 6. The electricity receiving unit 62 of the present embodiment is provided at the rear of the traveling direction. The electricity receiving unit 62 is an electricity receiving coil converting an alternating magnetic field output from the charging point 7 and supplying the electric power to the electricity storage device 61 as charging electric power. Note that when the charging point 7 is a charging device of a contact power supply system, the electricity receiving unit 62 is an electricity receiving electrode capable of being in contact with a power supply electrode of the charging point 7.

The travel driving unit 63 is driven by the electric power stored in the electricity storage device 61. The travel driving unit 63 is, for example, a motor. The travel driving unit 63 is controlled by the traveling vehicle controller 67. The pair of wheels 64 and 64 are rotated by the travel driving unit 63 to cause the traveling vehicle 6 to travel.

The communication interface 65 is provided at a certain position of the traveling vehicle 6 and is a wireless communication device for communicating with the system controller 8. The communication interface 65 is, for example, a wireless LAN device. The traveling vehicle controller 67 receives various kinds of instructions from the system controller 8 via the communication interface 65 and controls the traveling vehicle 6 based on the received instructions.

The traveling vehicle controller 67 is a computer system having a central processing unit (CPU), storage devices such as a random access memory (RAM), a read only memory (ROM), and a solid state drive (SSD), various kinds of interfaces (for example, a network interface, an A/D convertor, and a D/A convertor), and the like. Part or the whole of the functions of the traveling vehicle controller 67 described below may be stored in the storage devices and implemented by a computer program capable of being executed by the computer system. Part or the whole of the functions of the traveling vehicle controller 67 may be implemented by hardware such as a system on a chip (SoC).

The traveling vehicle controller 67 controls the units constituting the traveling vehicle 6. Specifically, the traveling vehicle controller 67 moves the traveling vehicle 6 based on a movement instruction transmitted by the system controller 8. That is, the traveling vehicle controller 67 drives the travel driving unit 63 to move the traveling vehicle 6 to a destination contained in the movement instruction. Examples of the destination designated by the system controller 8 include a certain incoming and outgoing port 3A of the automated warehouse 3, a certain processing apparatus 4, and a certain charging point 7. Upon reaching the destination contained in the movement instruction, the traveling vehicle controller 67 provides notification that the movement instruction has been completed to the system controller 8.

The traveling vehicle controller 67 calculates a battery remaining amount of the electricity storage device 61 mounted on its own vehicle. The traveling vehicle controller 67, for example, regularly calculates a current electricity storage amount of the electricity storage device 61 based on the voltage of the electricity storage device 61 input via an A/D convertor or the like. The traveling vehicle controller 67 provides notification of the current electricity storage amount of the electricity storage device 61 regularly calculated to the system controller 8. This enables the system controller 8 to monitor the current electricity storage amount of the electricity storage device included in each of the traveling vehicles 6.

The charging point 7 charges the electricity storage device 61 of the traveling vehicle 6 stopped at a certain position with respect to the charging point 7. The charging points 7 are provided along the route R. In the present embodiment, eight charging points 7 are installed inside the building 2. More specifically, two charging points 7 are disposed in an area A1 as one of three areas set in the building 2, four charging points 7 are disposed in an area A2, and two charging points 7 are disposed in an area A3. Note that described is an example in which a plurality of charging points 7 are disposed in each of the areas A1 to A3, but only one charging point 7 may be disposed in some areas. The charging point 7 outputs charging electric power to the electricity receiving unit 62 of the traveling vehicle 6 to execute charging of the electricity storage device 61. The charging point 7 is, for example, a charging device of a non-contact power supply system having a power supply coil outputting an alternating magnetic field as the charging electric power. Note that the charging point 7 is not limited to the charging device of the wireless power supply system and may be, for example, a charging device of a contact power supply system being in contact with an electricity receiving electrode (not illustrated) included in the traveling vehicle 6 to output charging electric power to the electricity receiving electrode.

As described above, the three areas A1 to A3 are set in the building 2. The areas A1 to A3 referred to in this example may be areas set by, for example, virtually dividing the area in which the route R of the traveling vehicles 6 is disposed, may be areas set for respective manufacturing steps, or may be set for respective spaces physically sectioned. These areas A1 to A3 are managed by the system controller 8.

The system controller 8 controls the travel of the traveling vehicles 6. The system controller 8 is a computer system having a CPU, storage devices such as a RAM, a ROM, and an SSD, various kinds of interfaces (for example, a network interface, an A/D convertor, and a D/A convertor), and the like. Part or the whole of the functions of the system controller 8 described below may be stored in the storage devices and implemented by a computer program capable of being executed by the computer system. Part or the whole of the functions of the system controller 8 may be implemented by hardware such as a system on a chip (SoC). The system controller 8 is provided to be able to communicate via the respective communication interface 65 with the travelling vehicle controller 67 of each of the traveling vehicles 6.

As illustrated in FIG. 3, the system controller 8 has a vacancy detector 81 and a movement instruction unit 82 as conceptual parts executing various kinds of control processing in the traveling vehicle system 1. The vacancy detector 81 and the movement instruction unit 82 formed as such conceptual parts can be configured as software in which a computer program stored in the ROM is loaded onto the RAM and executed by the CPU, for example. The system controller 8 manages the route R of the traveling vehicles 6 in a divided manner into the areas A1 to A3.

The movement instruction unit 82 instructs the traveling vehicle 6 having the electricity storage amount (the battery remaining amount) of the electricity storage device 61 fallen below a first threshold (hereinafter also referred to as the "battery low traveling vehicle 6") to move to the charging point 7. Specifically, each of the traveling vehicles 6 monitors the electricity storage amount of the electricity storage device 61 of its own vehicle and, if the electricity storage amount falls below the first threshold, requests charging from the system controller 8. The movement instruction unit 82 instructs the traveling vehicle 6 with a charging request to move to the charging point 7. Note that the movement instruction unit 82 may monitor the electricity storage amount of each of the traveling vehicles 6 being regularly transmitted and may instruct the traveling vehicle 6 that has fallen below the first threshold to move to the charging point 7. Note that the charging point 7 referred to in this example may be a vacant charging point 7A, in which a traveling vehicle 6 under charging is not present, or an in-use charging point 7B, in which a traveling vehicle 6 under charging is present. The traveling vehicle 6 having received a movement instruction moves to a certain charging point 7 contained in the movement instruction, and the electricity storage device 61 is charged at the charging point 7. The traveling vehicle 6 having been instructed to move to the in-use charging point 7B waits near the in-use charging point 7B until charging of an earlier traveling vehicle 6 is completed.

The vacancy detector 81 detects a vacancy status of the charging point 7. The vacancy detector 81 detects the charging point 7 that is not charging a traveling vehicle 6 and is not designated as the movement destination of the movement instruction as the vacant charging point 7A. The presence or absence of vacancy in each of the charging points 7 can be monitored by managing the assignment status and the assignment completion status of the movement instructions to the charging points 7, a charging status in each of the charging points 7, and the like. Note that the presence or absence of vacancy in each of the charging points 7 can also be managed by providing a sensor or the like detecting the traveling vehicle 6 at each of the charging points 7. Furthermore, the vacancy detector 81 determines whether a specific charging point 70 (the charging point 7 hatched in FIG. 1) set in part of the charging points 7 is the vacant charging point 7A.

Specifically, as illustrated in FIG. 1, four charging points 7 out of the eight charging points 7 are set as the specific charging points 70. The specific charging point 70 is set at least one of the charging points 7 disposed in each of the areas A1 to A3. In the present embodiment, one specific charging point 70 is set in the area A1 as one of the three areas set in the building 2, two specific charging points 70 are set in the area A2, and one specific charging point 70 is set in the area A3. In other words, in the present embodiment, the vacancy detector 81 detects the vacancy status of half (50%) of the charging points 7 disposed in the building 2. The vacancy detector 81 detects the vacancy status of the specific charging points 70 set in each of the areas A1 to A3.

The eight charging points 7 are arranged in one direction, and the specific charging points 70 are set so as not to be adjacent to each other. In other words, the specific charging points 70 are set every other charging point in the eight charging points 7. Note that "being set" referred to in this example refers to being stored as the specific charging points 70 by the system controller 8.

When the vacant charging point 7A (7) not charging the traveling vehicle 6 is detected by the vacancy detector 81, the movement instruction unit 82 instructs the traveling vehicle 6 having the electricity storage amount equal to or above the first threshold to move to the charging point 7A. That is, the movement instruction unit 82, which normally moves the traveling vehicle 6 to the vacant charging point 7A when the electricity storage mount has fallen below the first threshold, moves the traveling vehicle 6 having the electricity storage amount equal to or above the first threshold to the vacant charging point 7A only when the vacant charging point 7A not charging the traveling vehicle 6 is detected by the vacancy detector 81.

Furthermore, the movement instruction unit 82 provides an upper limit of the number of the traveling vehicles 6 instructed to move to the vacant charging point 7A. The upper limit of the number referred to in this example is a number obtained by summing the number of the traveling vehicles 6 having the electricity storage amount fallen below the first threshold (the battery low traveling vehicles 6) and the number of the traveling vehicles 6 having the electricity storage amount equal to or above the first threshold instructed to move to the vacant charging point 7A by the movement instruction unit 82. For example, when the upper limit is reached by the battery low traveling vehicles 6 alone, the movement instruction unit 82 does not instruct the traveling vehicles 6 having the electricity storage amount equal to or above the first threshold to move to the vacant charging point 7A.

For example, the movement instruction unit 82 of the present embodiment sets the upper limit of the number of the traveling vehicles 6 instructed to move to the vacant charging point 7A at three. In the present embodiment, there is a possibility that a maximum of four vacant charging points 7A will be detected, but even in that case, only three traveling vehicles 6 can be moved to the vacant charging points 7A. This can prevent the number of the traveling vehicles 6 to be charged from excessively increasing. The upper limit of the number is set by calculating how many traveling vehicles 6 or more becoming unable to travel at once due to charging causes an inability to satisfy a transport capacity level required for the traveling vehicle system 1 based on the thus calculated number.

Note that without setting the specific charging points in the charging points, only the upper limit of the number described above may be set. Also in these cases, operation not falling below the transport capacity level required for the traveling vehicle system 1 is possible.

When the vacant charging point 7A is detected by the vacancy detector 81, the movement instruction unit 82 instructs the traveling vehicle 6 having the smallest electricity storage amount among the traveling vehicles 6 having the electricity storage amount equal to or above the first threshold to move to the vacant charging point 7A. This preferentially charges the traveling vehicle 6 requiring charging in the near future and can thereby prevent that the traveling vehicle 6 falls below the first threshold. Note that the movement instruction unit 82 may instruct the traveling vehicle 6 being at or above the first threshold and being at or below a second threshold (for example, 99.5% of the full electricity storage amount) lower than a full electricity storage amount to move to the vacant charging point 7A. In this case, overcharging of the electricity storage device 61 is prevented, and thus the electricity storage device 61 can be protected.

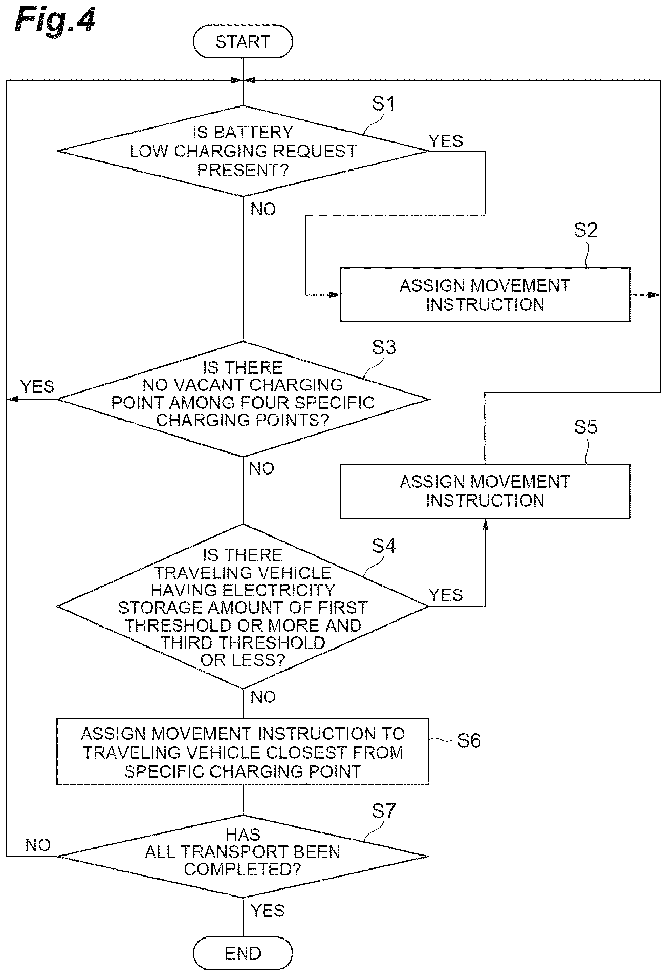

The following describes an example of charging to the traveling vehicle 6 in the traveling vehicle system 1 using FIG. 4. Charging in each of the traveling vehicles 6 is controlled by the system controller 8. As described above, the traveling vehicle controller 67 of each of the traveling vehicles 6 monitors the electricity storage amount of the electricity storage device 61 of its own vehicle and regularly transmits the electricity storage amount and its own position to the system controller 8. The system controller 8 monitors the electricity storage amount of the electricity storage device 61 of each of the traveling vehicles 6, the position of each of the traveling vehicles 6, the vacancy status of the charging points 7, and the completion status of the movement instruction.

When detecting that the electricity storage amount of the electricity storage device 61 has fallen below the first threshold (for example, 90% of the full electricity storage amount, hereinafter also referred to as "having become battery low"), each of the traveling vehicles 6 transmits a charging request to the system controller 8. The system controller 8 monitors the presence or absence of the charging request from the traveling vehicle 6 (Step S1). Upon reception of the charging request from the traveling vehicle 6 (S1: YES), the system controller 8 assigns a movement instruction to the charging point 7 to the traveling vehicle 6 with the charging request (Step S2). The system controller 8 assigns the movement instruction to the charging point 7 present at a position closest from the traveling vehicle 6 with the charging request among all the charging points 7. At this time, the system controller 8 may assign the movement instruction to the charging point 7 being currently vacant, the charging point 7 being present at a position closest to the traveling vehicle 6 that has requested charging.

If having not received the charging request from a traveling vehicle 6, that is, a traveling vehicle 6 whose battery is currently low (hereinafter also referred to as the "battery low traveling vehicle 6") is not present (S1: NO), the system controller 8 searches for a vacant charging point 7A (Step S3). Specifically, the system controller 8 detects the presence or absence of a vacant charging point 7A, which is a charging point 7 that is not charging a traveling vehicle 6 and is not designated as the movement destination of a movement instruction that was issued to a traveling vehicle 6. More specifically, the system controller 8 detects whether there is a vacant charging point 7A among the four specific charging points 70. If detecting that there is no vacant charging point 7A among the four specific charging points 70 (S3: YES), the system controller 8 returns to Step S1 and monitors the occurrence of a battery low traveling vehicle 6.

If detecting that there is a vacant charging point 7A among the four specific charging points 70 (S3: NO), the system controller 8 determines whether a traveling vehicle 6 being at or above the first threshold and being at or below a third threshold (for example, 91% of the full electricity storage amount, hereinafter the "battery low candidate traveling vehicle 6"), which is an electricity storage amount less than the second threshold, is present (Step S4). Note that the system controller 8 of the present embodiment recognizes the charging point 7 neither charging a traveling vehicle 6 nor assigned with the movement instruction as the vacant charging point 7A. The third threshold can be calculated based on the viewpoint of becoming battery low before a certain time (X seconds) elapses from the current point in time. The certain time (X seconds) indicates an estimated time until the traveling vehicle 6 assigned with the movement instruction moves to the charging point 7 and charging is completed. The certain time (X seconds) can be, for example, 300 seconds. The discharge amount of the electricity storage device 61 can be calculated based on, for example, a distance the traveling vehicle 6 travels.

If determining that there is a battery low candidate traveling vehicle 6 (S4: YES), the system controller 8 assigns a movement instruction to the vacant charging point 7A detected in Step S3 to the determined battery low candidate traveling vehicle 6 (Step S5). When a plurality of the battery low candidate traveling vehicles 6 are searched for, the system controller 8 assigns the movement instruction to the battery low candidate traveling vehicle 6 having the smallest electricity storage amount.

If determining that there is no battery low candidate traveling vehicle 6 (S4: NO), the system controller 8 searches for a traveling vehicle 6 being neither battery low nor battery low candidate positioned closest to one charging point 7 searched for, that is, the traveling vehicle 6 having the electricity storage amount of greater than the third threshold and assigns a movement instruction to the vacant charging point 7A searched for in Step S3 to the traveling vehicle 6 searched for (Step S6). The traveling vehicle 6 having thus been assigned to the vacant charging point 7A is controlled to move to the vacant charging point 7A and is charged even if it is neither in the state of battery low nor in the state of battery low candidate. Note that the searching for the battery low candidate traveling vehicle 6 in Step S4 and the traveling vehicle 6 being neither battery low nor battery low candidate in Step S6 may be narrowed to the traveling vehicle 6 traveling inside the area to which the vacant charging point 7A searched for belongs.

The assignment of the movement instruction in Step S2 and the assignment of the movement instruction in Step S5 and Step S6 are different in the following point. In Step S2, when the destination of the movement instruction is selected, all the charging points 7 are targeted, whereas in Step S5 and Step S6, when the destination of the movement instruction is selected, part (the specific charging points 70) of all the charging points 7 are targeted.

The system controller 8 determines scheduled transport of articles (tasks) (Step S7). If determining that some tasks remain (S7: NO), the system controller 8 returns to Step S1 and again monitors the occurrence of a traveling vehicle 6 having a low battery. If determining that all the tasks have been digested (S7: YES), the system controller 8 ends the sequence of Step S1 to Step S6.

The following describes the effects of the traveling vehicle system 1 of the above embodiment. The traveling vehicle system 1 of the above embodiment can move even the traveling vehicle 6 having the electricity storage amount not falling below the first threshold to the charging point 7 as soon as the charging point 7 becomes vacant and charge the traveling vehicle 6. This relatively increases the number of the traveling vehicles 6 in a state of a large electricity amount and can thus reduce the possibility of multiple traveling vehicles 6 falling below the first threshold occurring simultaneously.

In the traveling vehicle system 1 of the above embodiment, the vacancy detector 81 detects a charging point 7 that is not charging the traveling vehicle 6 and is not designated as the movement destination of the movement instruction as the vacant charging point 7A. This sets only a charging point 7 not being currently designated as the movement destination of the movement instruction among the currently vacant charging points 7 as the vacant charging point 7A and can thereby prevent that the number of the traveling vehicles 6 to be charged excessively increases. That is, the transport capacity of the traveling vehicle system 1 can be prevented to decrease.

In the traveling vehicle system 1 of the above embodiment, the vacancy detector 81 may determine whether the specific charging point 70 set in part of the charging points 7 is the vacant charging point 7A. This does not detect the vacant charging point 7A from among all the charging points 7 but detects the vacant charging point 7A from among partial charging points 7 (the specific charging points 70) and can thus prevent that the number of the traveling vehicles 6 to be charged excessively increases. That is, the transport capacity of the traveling vehicle system 1 can be prevented to decrease.

In the traveling vehicle system 1 of the above embodiment, the charging points 7 are disposed in each of the areas A1 to A3, and the specific charging point 70 is set in at least one of the charging points 7 disposed in each of the areas A1 to A3. This sets the specific charging points 70 such that they are not concentrated in a certain area and can thus prevent that the number of the traveling vehicles 6 under charging locally increases. That is, by moving the traveling vehicle 6 having the electricity storage amount fallen below the first threshold while avoiding that the charging points 7 under charging are locally increased in number, it can be prevented that the distance to move to the charging point 7 enabling charging becomes long. This enables quick charging of a traveling vehicle 6 having the electricity storage amount fallen below the first threshold.

In the traveling vehicle system 1 of the above embodiment, basically, the movement instruction to the vacant charging point 7A is assigned to the traveling vehicle 6 close to the vacant charging point 7A, but when there is a possibility that before the traveling vehicle 6 completes charging at the charging point 7, another traveling vehicle 6 will be battery low, the movement instruction to the vacant charging point 7A can be assigned to the traveling vehicle 6 having the smallest electricity storage amount among the possible traveling vehicles 6.

Although one embodiment has been described, an aspect of the present invention is not limited to the above embodiment. Various changes can be made without departing from the gist of the invention.

The above embodiment and modification have described an example in which when the vacant charging point 7A is detected by the vacancy detector 81, the movement instruction unit 82 instructs the traveling vehicle 6 having a small electricity storage amount to move to the vacant charging point 7A in Step S4, but this is not limiting. For example, instead of the above control, when the vacant charging point 7A is detected by the vacancy detector 81, the movement instruction unit 82 may instruct the traveling vehicle 6 closest to the vacant charging point 7A to move to the vacant charging point 7A in Step S4. Also in this case, by preferentially charging the traveling vehicle 6 close to the charging point 7, losses due to movement can be reduced. That is, the traveling vehicle 6 is quickly charged, and it can thus be prevented that a traveling vehicle 6 falls below the first threshold.

The above embodiment and modification have described an example in which the movement instruction unit 82 assigns the movement instruction to the traveling vehicle 6 closest to the specific charging point 70 in Step S6, but the movement instruction may be assigned to the traveling vehicle 6 having the smallest electricity storage amount from among the traveling vehicles 6 (having the electricity storage amount of greater than the third threshold).

The above embodiment and modification have described an example in which when the vacant charging point 7A is detected by the vacancy detector 81, the presence or absence of the traveling vehicle having the electricity storage amount equal to or above the first threshold and equal to or below the third threshold is determined (Step S4), but this is not limiting. For example, when the vacant charging point 7A is detected by the vacancy detector 81, the movement instruction unit 82 may determine the presence or absence of a traveling vehicle 6 present within a certain distance from the specific charging point 70 and, if determining that there is such a traveling vehicle 6, assign the movement instruction to the traveling vehicle 6 having the smallest electricity storage amount or assign the movement instruction to the traveling vehicle 6 present closest to the specific charging point 70.

The above embodiment and modification have described an example in which when the vacant charging point 7A is detected by the vacancy detector 81, the presence or absence of a traveling vehicle having the electricity storage amount equal to or above the first threshold and equal to or below the third threshold is determined (Step S4), but this is not limiting. For example, the movement instruction unit 82 may determine the presence or absence of a traveling vehicle 6 being at or above the first threshold and being at or below the second threshold (for example, 99.5% of the full electricity storage amount) lower than the full electricity storage amount and may instruct such a traveling vehicle 6 to move to the vacant charging point 7A (Step S5). In this case, overcharging to the electricity storage device 61 is prevented, and thus the electricity storage device 61 can be protected.

The above embodiment and modification have described an example in which eight charging points 7 are disposed, and four specific charging points 70 are set, but any change can be made as appropriate. In addition, the above embodiment and modification have described an example in which, in the divided three areas A1 to A3, the charging points 7 and the specific charging points 70 are set such that the number of the specific charging points 70 is smaller than the number of the charging points 7 in each of the areas, but the areas may be integrated into one area, and the charging points 7 and the specific charging points 70 may be set such that the number of the specific charging points 70 is smaller than the number of the charging points 7 in the one area. The setting and division of the areas can be set as appropriate in accordance with the area of the building 2 in which the traveling vehicle system 1 is installed or the like.

In the above embodiment and modification, the movement instruction unit 82 sets the upper limit of the number of the traveling vehicles 6 instructed to move to the vacant charging point 7A at three, but this is not limiting. For example, the movement instruction unit 82 can change the upper limit of the number of the traveling vehicles 6 instructed to move to the vacant charging point 7A as appropriate so long as it is within a range of the number of the charging points 7 installed (or the number of the specific charging points 70 installed), and in the above embodiment, the upper limit of the traveling vehicles 6 instructed to move to the vacant charging point 7A can be set at one to four.

The above embodiment and modification have described an example in which the vacancy detector 81 searches the specific charging points 70 set in advance for the vacant charging point 7A but may search all the charging points 7 for the vacant charging point 7A without setting any specific charging point 70.

The above embodiment and modification have described an example in which the traveling vehicle 6 is a trackless traveling vehicle traveling on the floor of the building 2 but it may be a tracked traveling vehicle traveling on a track such as a rail having branching and confluence.

The technical subject of aspects of the present invention can be described as follows:
[1] A traveling vehicle system including:
   a plurality of traveling vehicles having an electricity storage device and a travel driving unit driven by electric power stored in the electricity storage device and configured to travel on a route set in advance;
   a plurality of charging points provided along the route and configured to charge the electricity storage device of the traveling vehicles; and
   a controller configured to instruct a traveling vehicle having an electricity storage amount of the electricity storage device fallen below a first threshold to move to a charging point,
   the controller having:
      a vacancy detector configured to detect a vacancy status of the charging points for the traveling vehicles; and
      a movement instruction unit configured to instruct a traveling vehicle having the electricity storage amount equal to or above the first threshold to move to the vacant charging point, when a vacant charging point not charging a traveling vehicle is detected by the vacancy detector.
[2] The traveling vehicle system according to [1], in which the vacancy detector detects the charging point that is not charging a traveling vehicle and is not designated as a movement destination of the movement instruction as the vacant charging point.
[3] The traveling vehicle system according to [1] or [2], in which the vacancy detector determines whether a specific charging point set in part of the charging points is the vacant charging point.
[4] The traveling vehicle system according to [3], in which
   the controller manages the route of the traveling vehicles in a divided manner into a plurality of areas,
   the charging points are disposed in each of the areas, and
   the specific charging point is set in at least one of the charging points disposed in each of the areas.
[5] The traveling vehicle system according to any one of [1] to [4], in which the movement instruction unit provides an upper limit of a number of the traveling vehicles instructed to move to the vacant charging point.
[6] The traveling vehicle system according to any one of [1] to [5], in which the movement instruction unit instructs the traveling vehicle being at or above the first threshold and being at or below a second threshold lower than a full electricity storage amount to move to the vacant charging point.
[7] The traveling vehicle system according to [6], in which the movement instruction unit instructs the traveling vehicle having the smallest electricity storage amount among the traveling vehicles having the electricity storage amount equal to or above the first threshold and equal to or below the second threshold to move to the vacant charging point.
[8] The traveling vehicle system according to any one of [1] to [7], in which the movement instruction unit instructs the traveling vehicle positioned within a certain zone from the vacant charging point to move to the vacant charging point.
[9] The traveling vehicle system according to [8], in which the movement instruction unit instructs the traveling vehicle positioned closest to the vacant charging point to move to the vacant charging point.

### Reference Signs List

1 Traveling vehicle system
2 Building
3 Automated warehouse
4 Processing apparatus
6 Traveling vehicle
7 Charging point
7A Vacant charging point
7B In-use charging point
8 System controller (controller)
61 Electricity storage device
62 Electricity receiving unit
63 Travel driving unit
67 Traveling vehicle controller
70 Specific charging point
81 Vacancy detector
82 Movement instruction unit
R Route

## Claims

1. A traveling vehicle system including:
a plurality of traveling vehicles having an electricity storage device and a travel driving unit driven by electric power stored in the electricity storage device and configured to travel on a route set in advance;
a plurality of charging points provided along the route and configured to charge the electricity storage device of the traveling vehicles; and
a controller configured to instruct a traveling vehicle having an electricity storage amount of the electricity storage device fallen below a first threshold to move to a charging point,
the controller having:
a vacancy detector configured to detect a vacancy status of the charging points for the traveling vehicles; and
a movement instruction unit configured to instruct a traveling vehicle having the electricity storage amount of the first threshold or more to move to the vacant charging point, when a vacant charging point not charging a traveling vehicle is detected by the vacancy detector.

2. The traveling vehicle system according to claim 1, wherein the vacancy detector detects the charging point that is not charging a traveling vehicle and is not designated as a movement destination of the movement instruction as the vacant charging point.

3. The traveling vehicle system according to claim 1 or 2, wherein the vacancy detector determines whether a specific charging point set in part of the charging points is the vacant charging point.

4. The traveling vehicle system according to claim 3, wherein
the controller manages the route of the traveling vehicles in a divided manner into a plurality of areas,
the charging points are disposed in each of the areas, and
the specific charging point is set in at least one of the charging points disposed in each of the areas.

5. The traveling vehicle system according to claim 1 or 2, wherein the movement instruction unit provides an upper limit of a number of the traveling vehicles instructed to move to the vacant charging point.

6. The traveling vehicle system according to claim 1 or 2, wherein the movement instruction unit instructs the traveling vehicle being at or above the first threshold and being at or below a second threshold lower than a full electricity storage amount to move to the vacant charging point.

7. The traveling vehicle system according to claim 6, wherein the movement instruction unit instructs the traveling vehicle having the smallest electricity storage amount among the traveling vehicles having the electricity storage amount equal to or above the first threshold and equal to or below the second threshold to move to the vacant charging point.

8. The traveling vehicle system according to claim 1 or 2, wherein the movement instruction unit instructs the traveling vehicle positioned within a certain zone from the vacant charging point to move to the vacant charging point.

9. The traveling vehicle system according to claim 8, wherein the movement instruction unit instructs the traveling vehicle positioned closest to the vacant charging point to move to the vacant charging point.
